# EUROPEAN PATENT SPECIFICATION

(11) **EP 2 189 926 B1**
(45) Date of publication and mention of the grant of the patent: **19.09.2012**
(21) Application number: 08169713.8
(22) Date of filing: 21.11.2008
(51) Int. Cl.: G06K 9/22, G06K 9/20, G06K 9/32

(54) **Method for providing camera-based services using a portable communication device of a user and portable communication device of a user**
Verfahren zur Bereitstellung von kamerabasierten Diensten bei Verwendung eines tragbaren Kommunikationsgerätes eines Benutzers und tragbares Kommunikationsgerät eines Benutzers
Procédé pour la fourniture de services basés sur caméra utilisant un dispositif de communication portable d'un utilisateur et dispositif de communication portable d'un utilisateur

(43) Date of publication of application: 26.05.2010
(73) Proprietor: beyo GmbH, 14467 Potsdam (DE)
(72) Inventor: Göktekin, Cüneyt, 14467 Potsdam (DE); Tenchio, Oliver, 14467 Potsdam (DE)
(74) Representative: Farago, Peter Andreas

(56) References cited:
- WO-A-01/04790
- WO-A-2007/082536
- WO-A-2008/114104
- US-A1- 2004 141 644
- US-A1- 2005 007 444
- US-A1- 2005 221 856
- JIAN LIANG ET AL: "Camera-based analysis of text and documents: a survey" INTERNATIONAL JOURNAL OF DOCUMENT ANALYSIS AND RECOGNITION (IJDAR), SPRINGER, BERLIN, DE, vol. 7, no. 2-3, 1 July 2005 (2005-07-01), pages 84-104, XP019352711 ISSN: 1433-2825

## Description

### TECHNICAL FIELD

The present invention relates to a method for providing camera-based services using a portable communication device of a user and a related portable communication device of a user.

### BACKGROUND ART

Portable communication devices are widely used in daily life by users wishing to perform communication in an easy manner and at every time independent of any fixedly installed communication terminals.

Nowadays, such portable communication devices offer a great number of services including a WAP service and the like. If the user wants to use the WAP service, the user has to input several data related to the WAP service which is troublesome using a numeric keypad of the portable communication device if the portable communication device is for example a mobile phone or a small alphanumeric keypad of the portable communication device if the portable communication device is for example a smartphone.

Document WO2007/082536 discloses a mobile phone with camera and OCR, various selectable services are available to the user through a GUI.

Document US 2005/122424 discloses a stand for a camera-equipped wireless communications device. In one embodiment the stand comprises a telescopic shaft fixed to a base that allows the user to raise and lower the device. Document JP 2004101749 discloses a tripod suitable for a cellular phone with built-in camera which comprises three telescopic legs which rest on a table.

### DISCLOSURE OF INVENTION

It is therefore the object of the present invention to provide a method and a portable communication device which enable a user to input data to the portable communication device in a simple manner and to use inputted data in a great number of services which are provided in connection with the portable communication device.

This object is solved by the measures indicated in claims 1 and 19.

Further advantageous modifications of the present invention are subject matter of the dependent claims.

In more detail, there is provided a method for providing camera-based services using a portable communication device of a user, comprising the steps of capturing an image of an environment using a camera of the portable communication device of the user to obtain image data, processing the image data such that text data is recognized and extracted from the image data, and outputting data related to the text data in a form noticeable or convertable to be noticeable by the user of the portable communication device.

Preferably, the text data is further processed to obtain the data related to the text data.

Preferably, at least one of the step of processing and the step of further processing is performed by the portable communication device of the user.

Preferably, at least one of the step of processing and the step of further processing is performed by an external processing unit.

Preferably, the external processing unit comprises at least one server.

Preferably, the text data is transmitted from the portable communication device of the user to the external processing unit, further processed by the external processing unit to form the data related to the text data and the data related to the text data is transmitted from the external processing unit to the portable communication device of the user.

Preferably, a manner of at least one of processing and further processing depends on a service selected by the user of the portable communication device of the user using the mobile communication device of the user.

Preferably, the service is selected from a plurality of services displayed on a display of the mobile communication device of the user.

Preferably, at least one of the plurality of services is displayed on the display of the portable communication device of the user using at least one of an icon or text data.

Preferably, the portable communication device of the user is mounted on a support.

Preferably, the support comprises a telescopic pullout.

Preferably, the portable communication device is controlled by a separate control unit.

Preferably, in capturing the image the camera uses actuating means, enabling the user to focus on a desired portion of the environment and to perform automatic release in capturing the image.

Preferably, quality of an image to be captured is indicated by at least one of a manner of actuation of a vibrator of the portable communication device of the user, using a reticule displayed to the user, and an audio feedback provided by the portable communication device.

Preferably, the camera captures a first image of a first portion of the environment to be displayed in a transparent or semi-transparent manner and captures a second image of a second portion of the environment to be displayed in a transparent or semi-transparent manner to thereby enable the user to stitch the first and the second image.

Preferably, a position of the user is determined using at least one position sensor of the portable communication device of the user.

Preferably, the image is at least one of rotated and unwarped before obtaining the image data.

Preferably, block recognition is performed on the image to enable parallel processing in text recognition of obtained blocks and to enhance response time.

Preferably, at least one of the image data, the text data and the data related to the text data for at least one captured image are stored on a server to enable the portable communication device to access the at least one of the image data, the text data and the data related to the text data for at least one captured image in real-time.

Preferably, at least one of the image data, the text data and the data related to the text data for at least one captured image are stored in connection with position data indicating a position where the at least one captured image is captured.

Furthermore, there is provided a portable communication device, comprising a camera adapted to capture an image of an environment, a display adapted to display at least one of a plurality of services to be selectable by a user of the portable communication device, and outputting means adapted to output data related to text data in a form noticeable or convertable to be noticeable by the user of the portable communication device, wherein the portable communication device is adapted to perform the method for providing camera-based services when the user selects the at least one of the plurality of services.

Furthermore, all possible technically feasible combinations of the aforementioned features are also part of the present invention, wherein the aforementioned features and all possible technically feasible combinations of the aforementioned features can be also realized in a system for providing camera-based services.

### BRIEF DESCRIPTION OF FIGURES IN THE DRAWING

The present invention will be described below on the basis of specific embodiments with reference to the accompanying drawing, in which:
Fig. 1 shows a schematic diagram of a system according to the present invention;
Fig. 2 shows a flow chart according to the present invention;
Fig. 3 shows a schematic representation of a portable communication device mounted on a support;
Fig. 4 shows a schematic diagram of a display of a portable communication device when an image comprising a text object is to be captured; and
Fig. 5 shows a schematic representation of a display of a portable communication device when a specific service is to be performed.

### MODES FOR CARRYING OUT THE PRESENT INVENTION

Reference will now be made in detail to embodiments of the present invention, examples of which are illustrated in the accompanying drawing.

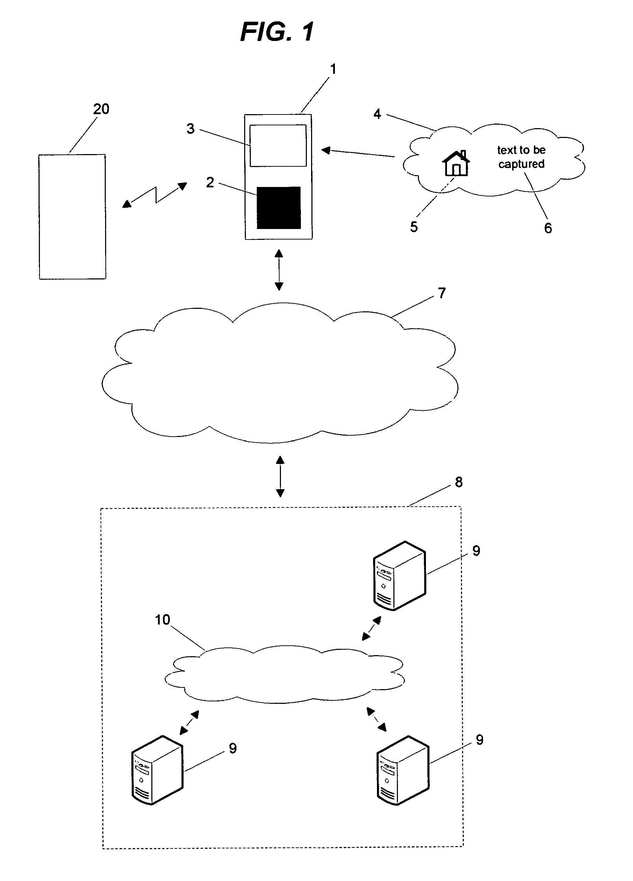

Fig. 1 shows schematic diagram of a system according to the present invention.

As shown in Fig. 1 the system comprises a portable communication device 1 having a keypad 2, a display 3, a camera (not shown) and outputting means (also not shown), a first network 7, an external processing unit 8 having at least one server 9 (three are shown in Fig. 1 as an example) and a second network 10, and a separate control unit 20.

Furthermore, Fig. 1 shows a scene 4 comprising a plurality of objects, such as a house 5 and a text object "text to be captured" 6.

The portable communication device 1 can capture an image from the scene 4 using the camera.

It should be noted that the portable communication device 1 can be remote controlled by the separate control unit 20. This separate control unit can be for example a Bluetooth-control unit or the like enabling wireless remote control of the portable communication device 1.

Furthermore, the portable communication device 1 can communicate data with the external processing unit 8 via the first network 7 as shown by the arrows between the portable communication device 1 and the first network as well as between the first network 7 and the external processing unit 8.

As mentioned above, the external processing unit 8 comprises at least one server 9, such as the three servers 9 shown in Fig. 1 as an example. The servers 9 can communicate with each other via a second network 10 as shown by the arrows between the servers 9 and the second network 10.

The first network 7 and the second network 10 can be the same network or can be networks different from each other as may be required by a respective application. For example, the first network can be a mobile communication network such as a GSM network and the second network can be a circuit-switched network or a packet-switched network. However, these examples are not limiting for the present invention and the networks can be chosen as required by a respective application.

As used herein, the term "server" could also be equivalent to the term "service" so that in this case services would communicate with each other via the second network if such services would be provided on different servers 9, i.e. different computers or computer systems, or would directly communicate with each other if such services would be provided on the same server 9, i.e. the same computer or computer system. In this respect an appropriate transmission protocol, i.e. an appropriate data structure and/or transmission mechanism, can be used to enable exchange of data.

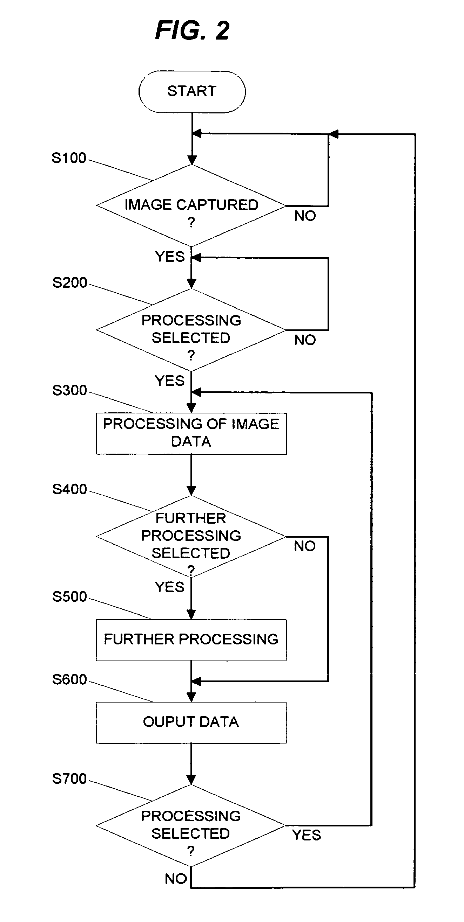

Fig. 2 shows a flow chart according to the present invention.

With reference to Fig. 2 the general functional principle of the present invention will be described.

In step S100 it is checked whether or not the portable communication device 1 has captured an image to be processed to obtain image data. The image to be processed comprises a text object such as the text object "text to be captured" 6 shown in Fig. 1 within the scene 4.

In step S200 it is checked, whether or not processing of the image data is selected. Selecting image data can be performed by the user of the portable communication device 1 for example by selecting a predetermined processing among a plurality of manners of processing shown in the display 3 of the portable communication device 1 as icon or text data using for example the keypad 2 of the portable communication device 1.

If the answer of step S200 is "NO" indicating that no processing is selected, the flow returns to step S100. If the answer of step S200 is "YES" indicating that a processing is selected, the flow proceeds to step S300 which performs the processing selected.

In step S400 it is checked whether or not further processing of data obtained by processing of step S300 is required. If the answer of step S400 is "YES" the flow proceeds to step S400 which performs the further processing required. In step S600 data obtained by the processing of step S300 and/or data obtained by the further processing of step S500 are outputted to the portable communication device 1. If the answer of step S400 is "NO" the flow directly proceeds to step S600 in which data obtained by the processing of step S300 are outputted to the portable communication device 1. In step S700 it is again checked whether or not processing of the image data is selected. If the answer in step S700 is "YES" the flow returns to step S300. If the answer in step S700 is "NO" the flow returns to step S100 and capturing of a new image is awaited.

In the general functional principle described above, the image data to be captured comprises a text object within the scene 4 shown in Fig. 1 such as the text object "text to be captured".

Such text object can be captured in step S100 using the camera of the portable communication device 1. The processing in step S300 is performed within the portable communication device 1 or within the external processing unit 8 after transmitting image data of the captured image to the external processing unit 8 via the first network 7 to recognize the text within the text object such as the text "text to be captured" of the text object "text to be captured" 6 to obtain text data.

The further processing in step S400 which is an optional feature can then be performed either in the portable communication device 1 or in the external processing unit 8 after transmitting the text data to the external processing unit 8 via the first network 7 if necessary. Details of such further processing will be described later.

The output of data in step S600 is performed in the portable communication device 1 such that data either directly relating to the text data or indirectly relating to the text data, i.e. relating to data obtained by processing and/or further processing of the text data, are outputted in a form noticeable or convertable to be noticeable by the user of the portable communication device 1 such as written text, speech or the like.

From the above it is clear that at least one of processing or further processing can be performed in the portable communication device 1 or the external processing unit 8 dependent of a respective application.

As regards the specific manner of capturing the image data comprising the text object the following processing is performed.

First of all, the image can be captured using the portable communication device 1 which is held in the hand of the user of the portable communication device 1 in a manner of normal use.

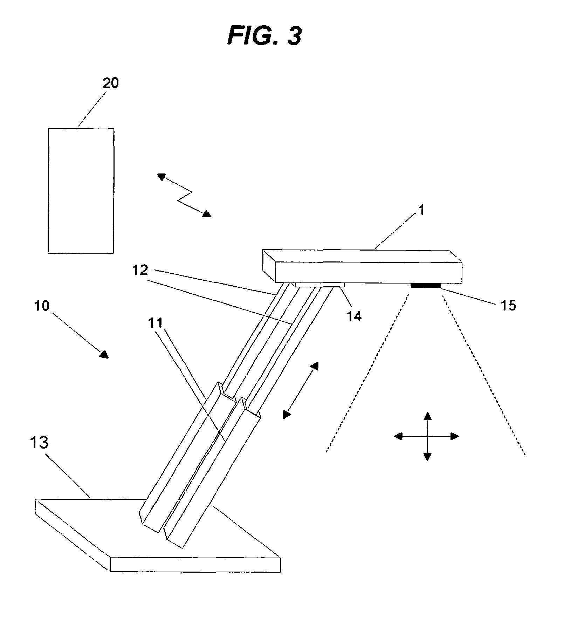

Fig. 3 shows a schematic representation of the portable communication device 1 mounted on a support 10.

In addition, the portable communication device 1 comprising the camera 15 can be mounted on the support 10. The support 10 shown in Fig. 3 is a telescopic pullout comprising two lower rods 11, two upper rods 12, a base 13 and a fastening 14.

The two lower rods 11 are attached to the base 13 and the two upper rods 12 are slidably inserted into the two lower rods 11. The fastening 14 is attached to the two upper rods 12 and is adapted to hold the portable communication device 1. By slidably moving the two lower rods 11 in the direction shown by the inclined arrow in Fig. 3, a capturing area of the camera 15 can be adjusted as is shown by the vertical and horizontal arrows in Fig. 3.

It should be noted that the support 10 is not limited to the telescopic support mentioned above but any kind of arrangement of a support can be used as long as an appropriate capturing area for capturing an image using the camera 15 of the portable communication device 1 is achieved.

Furthermore, such support 10 can be advantageously used, if text objects are present for example on a sheet of paper or the like. In this case, there could be provided a guide edge or lay edge to enable the user of the portable communication device 1 to position the sheet of paper such that it is surely within the capturing area of the camera of the portable communication device 1 or such that a relevant part thereof is within the capturing area of the camera of the portable communication device 1.

The portable communication device 1 can be remote controlled by the separate control unit 20 in the same manner as described above with respect to Fig. 1.

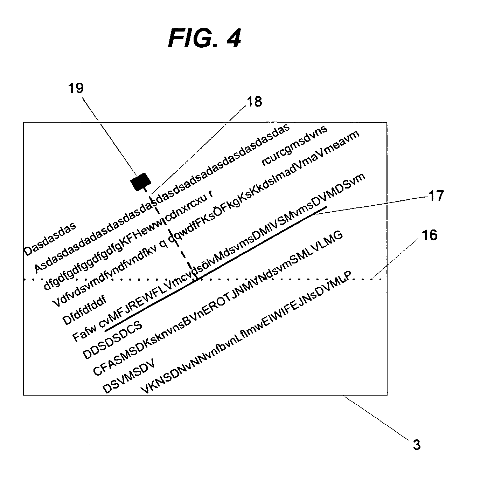

Fig. 4 shows a schematic diagram of the display 3 of the portable communication device 1 when an image comprising a text object is to be captured.

As shown in Fig. 4, if user wishes to capture an image using the camera 15 of the portable communication device the user selects a capturing mode of the portable communication device 1 such that the display 3 of the portable communication device 1 shows the image within the capturing area of the camera 15 of the portable communication device 1. Furthermore, the display 3 shows a specific reticule displayed to the user of the portable communication device 1. This reticule enables the user of the portable communication device 1 to focus on a desired portion of the environment in the following manner.

As shown in Fig. 4, the reticule comprises a first line 16 shown as a horizontal dotted line (in an actual application of the present invention this line could be indicated on the display 3 of the portable communication device 1 in a specific color such as red) which helps the user of the portable communication device 1 to adjust the camera 15 of the portable communication device 1 to the text object or text objects to be captured which are contained in the environment. If the text object or the text objects are not adjusted in a suitable manner, the portable communication device 1 will rotate the image shown in the display 3 of the portable communication device 1 in a suitable manner such that later text recognition can be performed faster and more reliable.

Furthermore, the reticule comprises a second line 17 shown as an inclined continuous line which indicates how a text object or text objects would be rotated by the portable communication device 1. If this continuous line has a first specific color such as green this indicates that the text object or text objects are aligned in a suitable manner and the text object or text objects can immediately be used without any further processing. If this continuous line has a second specific color such as red this indicates that the ext object or text objects should be rotated by the portable communication device 1.

Finally, the reticule comprises a third line 18 shown as an inclined dashed line which indicates distortion of the text object or text objects. The third line 18 comprises a projection point 19 at an end thereof which helps the user to capture the text object or text objects without distortion by assisting the user to hold the camera 15 as upright as possible with respect to the text object or text objects to be captured. If the projection point 19 is exactly in the center of the image shown in the display 3, the camera 15 is held exactly upright with respect to the text object or text objects to be captured.

Furthermore, in addition to or instead of the reticule displayed to the user, suitable alignment such as quality of an image to be captured can be indicated by at least one of a manner of actuation of a vibrator of the portable communication device 1, and an audio feedback provided by the portable communication device 1. For example, the faster the vibrator vibrates or the louder an audio feedback of the portable communication device 1 is the worse the quality of the image to be captured is.

Generally speaking, there can be provided actuating means, wherein in capturing the image the camera uses the actuating means to enable the user to focus on a desired portion of the environment. Furthermore, by using the actuating means there can be performed automatic release in capturing the image.

Such actuating means can also be or use a G-sensor or acceleration sensor to suitably align the image before performing automatic release in capturing the image.

The following manners of processing can be performed in addition to or instead of the above.

In a first manner, an overall image is acquired by the camera. Using a view finder an image to be captured is selected from the acquired overall image. Thereafter image enhancement is performed using for example an adaptive histogram alignment or the like. To correct any error of exposure and to enhance local contrast of the image to be captured histogram alignment or the like is performed. Thereafter, rotation analysis using for example binarization, differentiation and/or Local Hough analysis or the line is performed. To enhance performance the image is rescaled to a small size and binarized. Using edge analysis and following local Hough transformation it is recognized by which angle text in the image to be captured is rotated as compared to a horizontal line. This can be assisted by displaying an artificial horizon which helps the user of the portable communication device 1 in achieving appropriate alignment of the camera and enhances later processing speed.

Data of a G-sensor or acceleration sensor are read out and this data indicating relative position of the camera is used for outputting a specific view assisting the user in appropriate alignment of the camera and avoiding distortion if the image to be captured comprises an even text object for later text recognition.

In a second manner, an image to be captured is acquired by the camera. If the image to be captured is captured by actuating the camera an auto-focus function is applied to the image to be captured and the image to be captured is then actually captured. The captured image data is then stored for example in JPEG data structure. Thereafter image enhancement such as adaptive histogram alignment is performed as has been mentioned above with respect to the first manner.

Segmentation is performed on continuous blocks for example using region growing, convex Hulls or the like. To enhance speed of later text analysis and to speed up later read out, continuous blocks are segmented.

Then, rotation analysis is performed using for example binarization, differentiation, local Hough analysis or the like. Since text recognition is difficult using rotated texts, rotation angle of the captured image is verified and the captured image is inverse rotated.

It is evaluated whether or not a block contains text which can be analyzed. To save time in later text analysis, continuous blocks are checked for the probability of containing text.

The order of reading out text is determined from the left upper side to the right lower side. Adaptive binarization is performed to enable later text recognition even if poor lighting conditions are present such as hard shadow. In the later text recognition the thus obtained text blocks are used.

In addition to the above, there could be performed stitching of two or more images in such a manner that a first portion of the environment to be displayed is captured in a transparent or semi-transparent manner and thereafter a second portion of the environment to be displayed is captured in a transparent or semi-transparent manner such that the user is enabled to stitch the first and second image to obtain a overall image to be used for further processing.

Also, there could be performed unwarping of the text object or text objects to thereby improve the quality of an image by removing any warping effect therefrom.

If the text object or text objects is or are selected and adjusted using the processing mentioned above the text object or text objects is or are captured by actuating the capturing mode of the portable communication device 1 to obtain image data corresponding to the text object or text objects.

Furthermore, block recognition could be performed on captured image data before processing or further processing such as text recognition mentioned below is performed to enable parallel processing of obtained blocks, such as one block is processed and another block is prepared, and to enhance response time of overall processing.

Then, there is performed processing as shown in steps S200 to S700 of Fig. 2.

In the following, specific services for processing and/or further processing are described. However, it should be noted that such specific services are not limiting for the present invention but rather are intended to more fully make clear the specific features shown in Fig. 1 and Fig. 2 by way of example.

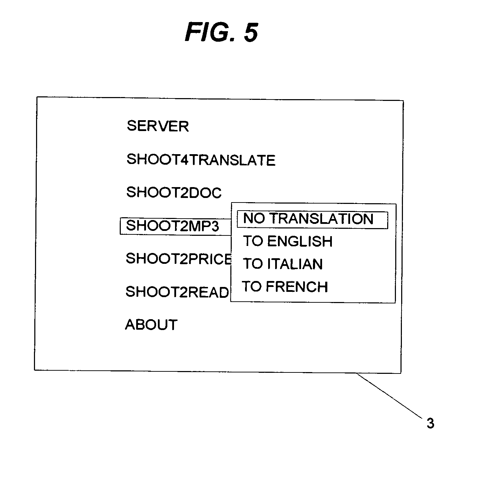

Fig. 5 shows a schematic representation of the display 3 of the portable communication device 1 when a specific service is to be performed.

As shown in Fig. 5, the display 3 of the portable communication device 1 shows different services when a user has selected to perform one of such services based on an image captured as mentioned above. In Fig. 5 five items "SHOOT4TRANSLATE", "SHOOT2DOC", "SHOOT2MP3", "SHOOT2PRICE" and "SHOOT2READ" are shown by way of example as services which can be selected by the user of the portable communication device 1. Furthermore, two further items "SERVER" and "ABOUT are shown in Fig. 5. The further item "SERVER" enables a user to input an address of a server such as a server 9 of the external processing unit 8 shown in Fig. 1. This address is stored and used for services to be selected later by the user of the portable communication device 1 if the need arises. The further item "ABOUT" enables the user to obtain further information about the program including all of the services which can be selected by the user of the portable communication device 1 or to obtain any information about the manner and amount of payment of respective services and/or any licensing information.

In Fig. the service "SHOOT2MP3" is selected by the user as is obvious from the box around the service "SHOOT3MP3" and a subitem "NO TRANSLATION" is selected as is obvious from the box around the subitem "NO TRANSLATION".

It should be noted that respective services are shown in Fig. 5 as being displayed using text data displayed in the display 3 of the portable communication device, but there is also the possibility to use another way of displaying respective services such as using icons as long as the user of the portable communication device 1 is enabled to select one service from the plurality of services.

In the following the service "SHOOT4TRANSLATE" will be described by again referring to Fig. 1 and Fig. 2 as need arises.

Image data captured as mentioned above are processed in the mobile communication device 1 to recognize and extract text data from the image data. Thereafter, the text data are transmitted to a server 9 of the external processing unit 8 which is indicated by the address stored during selecting the item "SERVER" beforehand.

The text data can be transmitted to the server 9 via for example WLAN, UMTS or the like.

The server 9 which receives the text data then further processes the text data by translating the text data from one language into another language selected beforehand by the user of the portable communication device 1. Thereafter, the data corresponding to the translated text data are transmitted from the server 9 to the mobile communication device 1 and are then either displayed on the display 3 of the portable communication device 1 or converted to speech and read out by an internal speech synthesizer of the portable communication device 1 and/or stored.

In the following the service "SHOOT2DOC" will be described by again referring to Fig. 1 and Fig. 2 as need arises.

Image data captured as mentioned above are transmitted to a server 9 of the external processing unit 8 which is indicated by the address stored during selecting the item "SERVER" beforehand. The server 9 processes the image data to recognize and extract text data from the image data.

The text data is analyzed by the server 9 and converted to a text file in a specific format such as DOC or PDF. The text file is transmitted from the server 9 to the mobile communication device 1 and is then displayed in the display 3 of the mobile communication device 1 and/or stored.

In the following the service "SHOOT2MP3" will be described by again referring to Fig. 1 and Fig. 2 as need arises.

Image data captured as mentioned above are transmitted to a server 9 of the external processing unit 8 which is indicated by the address stored during selecting the item "SERVER" beforehand. The server 9 processes the image data to recognize and extract text data from the image data. A speech synthesizer of the server 9 reads out the text data to obtain speech data in a specific format such as MP3. The speech data are transmitted from the server 9 to the mobile communication device 1 and are played on the mobile communication device 1 using an appropriate player such as the RealPlayer and/or stored. Optionally, the text data can be translated into another language by the server 9 before obtaining the speech data.

In the following the service "SHOOT2PRICE" will be described by again referring to Fig. 1 and Fig. 2 as need arises.

Image data captured as mentioned above are processed in the mobile communication device 1 to recognize and extract text data from the image data. Thereafter, the text data are transmitted to a server 9 of the external processing unit 8 which is indicated by the address stored during selecting the item "SERVER" beforehand.

As an example, it is assumed that a specific designation of a product such as "NOKIA N95 8GB" has been recognized and extracted from the image data. The server 9 analyses online offers for this product for example in cooperation with another server 9 of the external processing unit 8 and then transmits data indicating the lowest price and the product name from the server 9 to the mobile communication device 1 where this information is displayed in the display of the mobile communication device 1 and/or stored. Alternatively, instead of using online offers there is also the possibility to use a position sensor such as a GPS sensor integrated with the mobile communication device 1 and to select an offer having a low price and being made by a seller near the position of the mobile communication device 1.

It should be noted that such position sensor can also be used in any other services as need arises.

In the following the service "SHOOT2READ" will be described by again referring to Fig. 1 and Fig. 2 as need arises.

Image data captured as mentioned above are processed in the mobile communication device 1 to recognize and extract text data from the image data. Thereafter, the text data is directly read out by an internal speech synthesizer of the mobile communication device 1. Thus, no interaction with the external processing unit 8 and/or any server 9 thereof is necessary.

Alternatively, the text could be displayed in the display 3 of the portable communication device 1 to thereby obtain a service "SHOOT2TEXT" (not shown in Fig. 5).

Furthermore, in all services mentioned above and any other services which could be applied to the system mentioned above, there could be performed storing of at least one of the image data, the text data and the data related to the text data of at least one captured image on at least one of the servers 9 to enable the portable communication device 1 to access the at least one of the image data, the text data and the data related to the text data for at least one captured image in real-time. This enables archiving of data at a central site for example in a kind of at least one list.

In this respect, the at least one of the image data, the text data and the data related to the text data for the at least one captured image can be stored in connection with position data indicating a position where the at least one captured image is captured. This position information can be obtained by for example a GPS sensor or the like. If such data stored in connection with position data are displayed at a site where such data or the image data from which such data are derived have been obtained, so-called geo-tagging can be performed.

Having described specific examples of services to be selected by the user of the mobile communication device 1 it should be noted that any other services may be provided using the principles mentioned above, which services could or could not need any interaction between the portable communication device 1 and the external processing unit 8 and/or one or more servers 9 thereof and/or any interaction between servers 9 of the external processing unit. For example, the aforementioned services could be modified accordingly if the need arises.

Furthermore, image data captured at one time can be used for an arbitrary number of services instead of the need to newly capture image data before selecting a new service.

As is obvious from the above, the present invention enables a user to input data to the portable communication device in a simple manner without the need of using a keypad or the like and to use inputted data in a great number of services which are provided in connection with the portable communication device

The portable communication device 1 described above can be for example a mobile phone such as a smartphone or the like having a camera integrated therein as well as sufficient memory capacity to store and execute a program having functionalities as mentioned above.

It should by noted that as software which is able to perform the aforementioned functionalities there could be used software as described in the published European patent application 2065871 assigned to the assignee of the present invention, wherein this software is ported to the applications as mentioned above. Thus, in this respect this unpublished European patent application is incorporated herein by reference.

Although the present invention has been described above as a method and a portable communication device having specific functionalities which are especially performed by software, it should be noted that the specific functionalities regarding all aspects of the aforementioned method and portable communication device represent alone subject matters according to the present invention, for which applicant reserves the right to prosecute them separated from the hardware structure described above by for example filing one or more divisional applications, one or more continuation applications or one or more continuation-in part applications.

Furthermore, although the present invention has been described in connection with certain specific embodiments for instructional purposes, the present invention is not limited thereto. Accordingly, various modifications, adaptations and combinations of various features of the described embodiments can be practiced without departing from the scope of the present invention as set forth in the accompanying claims.

## Claims

1. Method for providing camera-based services using a portable communication device (1) of a user, wherein the portable communication device (1) of the user is mounted on a telescopic pullout (10) comprising a base (13), two lower rods (11) attached to the base (13), two upper rods (12) slidable insertable into the two lower rods (11) and a fastening (14) attached to the two upper rods (12) and adapted to hold the portable communication device (1), the method comprising the steps of:
capturing an image of an environment using a camera (15) of the portable communication device (1) of the user to obtain image data;
processing the image data such that text data is recognized and extracted from the image data; and
outputting data related to the text data in a form noticeable or convertible to be noticeable by the user of the portable communication device (1).

2. Method according to claim 1, wherein the text data is further processed to obtain the data related to the text data.

3. Method according to claim 2, wherein at least one of the step of processing and the step of further processing is performed by the portable communication device (1) of the user.

4. Method according to claims 2 or 3, wherein at least one of the step of processing and the step of further processing is performed by an external processing unit (8).

5. Method according to claim 4, wherein the external processing unit comprises at least one server (9).

6. Method according to claim 5, wherein the text data is transmitted from the portable communication device (1) of the user to the external processing unit (8), further processed by the external processing unit (8) to form the data related to the text data and the data related to the text data is transmitted from the external processing unit (8) to the portable communication device (1) of the user.

7. Method according to one of claims 2 to 6, wherein a manner of at least one of processing and further processing depends on a service selected by the user of the portable communication device (1) of the user using the mobile communication device (1) of the user.

8. Method according to claim 7, wherein the service is selected from a plurality of services displayed on a display (3) of the mobile communication device (1) of the user.

9. Method according to claim 8, wherein at least one of the plurality of services is displayed on the display (3) of the portable communication device (1) of the user using at least one of an icon or text data.

10. Method according to one of claims 1 to 9, wherein the portable communication device (1) is controlled by a separate control unit (20).

11. Method according to one of claims 1 to 10, wherein in capturing the image the camera (15) uses actuating means, enabling the user to focus on a desired portion of the environment and to perform automatic release in capturing the image.

12. Method according to one of claims 11, wherein quality of an image to be captured is indicated by at least one of a manner of actuation of a vibrator of the portable communication device (1) of the user, using a reticule displayed to the user, and an audio feedback provided by the portable communication device (1).

13. Method according to one of claims 1 to 12, wherein the camera (15) captures a first image of a first portion of the environment to be displayed in a transparent or semi-transparent manner and captures a second image of a second portion of the environment to be displayed in a transparent or semi-transparent manner to thereby enable the user to stitch the first and the second image.

14. Method according to one of claims 1 to 13, wherein a position of the user is determined using at least one position sensor of the portable communication device (1) of the user.

15. Method according to on of claims 1 to 14, wherein the image is at least one of rotated and unwarped before obtaining the image data.

16. Method according to one of claims 1 to 15, wherein block recognition is performed on the image to enable parallel processing in text recognition of obtained blocks and to enhance response time.

17. Method according to one of claims 1 to 16, wherein at least one of the image data, the text data and the data related to the text data for at least one captured image are stored on a server (9) to enable the portable communication device (1) to access the at least one of the image data, the text data and the data related to the text data for at least one captured image in real-time.

18. Method according to one of claims 1 to 17, wherein at least one of the image data, the text data and the data related to the text data for at least one captured image are stored in connection with position data indicating a position where the at least one captured image is captured.

19. Portable communication device (1) mounted on a telescopic pullout (10), the telescopic pullout (10) comprising:
a base;
two lower rods (11) attached to the base;
two upper rods (12) slidably insertable into the two lower rods (11); and
a fastening (14) attached to the two upper rods (12) and adapted to hold the portable communication device (1) comprising:
a camera (15) adapted to capture an image of an environment;
a display (3) adapted to display at least one of a plurality of services to be selectable by a user of the portable communication device (1); and
outputting means adapted to output data related to text data in a form noticeable or convertible to be noticeable by the user of the portable communication device (1), wherein
the portable communication device (1) when mounted on the telescopic pullout(10) is adapted to perform a method according to one of claims 1 to 18 when the user selects the at least one of the plurality of services.

## Patentansprüche

1. Verfahren zur Bereitstellung von kamerabasierten Diensten bei Verwendung eines tragbaren Kommunikationsgerätes (1) eines Benutzers, wobei das tragbare Kommunikationsgerät (1) des Benutzers auf einem teleskopischen Auszug (10) montiert ist, der eine Basis (13) umfasst, zwei untere Stangen (11), die an der Basis (13) angebracht sind, zwei obere Stangen (12), die verschiebbar in die zwei unteren Stangen (11) einsetzbar sind, und eine Befestigung (14), die an den zwei oberen Stangen (12) angebracht ist und ausgebildet ist, um das tragbare Kommunikationsgerät (1) zu halten, wobei das Verfahren folgende Schritte umfasst:
Aufnahme eines Bildes einer Umgebung mit einer Kamera (15) des tragbaren Kommunikationsgerätes (1) des Benutzers, um Bilddaten zu erhalten,
Verarbeitung der Bilddaten, so dass Textdaten erkannt und aus den Bilddaten extrahiert werden, und
Ausgabe von Daten, die mit den Textdaten zusammenhängen, in einer Form, die für den Benutzer des tragbaren Kommunikationsgerätes (1) bemerkbar ist oder umgewandelt werden kann, um für ihn bemerkbar zu sein.

2. Verfahren gemäß Anspruch 1, worin die Textdaten weiterverarbeitet werden, um die mit den Textdaten zusammenhängenden Daten zu erhalten.

3. Verfahren gemäß Anspruch 2, worin der Schritt der Verarbeitung und/oder der Schritt der Weiterverarbeitung von dem tragbaren Kommunikationsgerät (1) des Benutzers durchgeführt werden.

4. Verfahren gemäß Anspruch 2 oder 3, worin der Schritt der Verarbeitung und/oder der Schritt der Weiterverarbeitung von einer externen Verarbeitungseinheit (8) durchgeführt werden.

5. Verfahren gemäß Anspruch 4, worin die externe Verarbeitungseinheit mindestens einen Server (9) umfasst.

6. Verfahren gemäß Anspruch 5, worin die Textdaten von dem tragbaren Kommunikationsgerät (1) des Benutzers an die externe Verarbeitungseinheit (8) übertragen werden, von der externen Verarbeitungseinheit (8) weiterverarbeitet werden, um die mit den Textdaten zusammenhängenden Daten zu bilden, und die mit den Textdaten zusammenhängenden Daten von der externen Verarbeitungseinheit (8) an das tragbare Kommunikationsgerät (1) des Benutzers übertragen werden.

7. Verfahren gemäß einem der Ansprüche 2 bis 6, worin eine Art der Verarbeitung und/oder Weiterverarbeitung von einem Dienst abhängt, der vom Benutzer des tragbaren Kommunikationsgerätes (1) des Benutzers ausgewählt wird, der das mobile Kommunikationsgerät (1) des Benutzers nutzt.

8. Verfahren gemäß Anspruch 7, worin der Dienst gewählt ist aus einer Vielzahl von Diensten, die auf einem Display (3) des mobilen Kommunikationsgerätes (1) des Benutzers angezeigt werden.

9. Verfahren gemäß Anspruch 8, worin mindestens einer der Vielzahl von Diensten auf dem Display (3) des tragbaren Kommunikationsgerätes (1) des Benutzers mit Hilfe eines Symbols und/oder von Textdaten angezeigt wird.

10. Verfahren gemäß einem der Ansprüche 1 bis 9, worin das tragbare Kommunikationsgerät (1) von einer separaten Steuereinheit (20) gesteuert wird.

11. Verfahren gemäß einem der Ansprüche 1 bis 10, worin die Kamera (15) bei der Aufnahme des Bildes Betätigungsmittel nutzt, die es dem Benutzer ermöglichen, einen gewünschten Ausschnitt der Umgebung zu fokussieren und bei der Aufnahme des Bildes eine automatische Auslösung durchzuführen.

12. Verfahren gemäß einem der Ansprüche 11, worin die Qualität eines aufzunehmenden Bildes von mindestens einem von Folgendem angezeigt wird: der Art der Betätigung eines Vibrationserzeugers des tragbaren Kommunikationsgerätes (1) des Benutzers, mit Hilfe einer Zielmarke, die dem Benutzer angezeigt wird, und einer Audio-Rückmeldung, die von dem tragbaren Kommunikationsgerät (1) geliefert wird.

13. Verfahren gemäß einem der Ansprüche 1 bis 12, worin die Kamera (15) ein erstes Bild eines ersten Ausschnitts der Umgebung aufnimmt, das auf transparente oder semitransparente Art und Weise angezeigt werden soll, und ein zweites Bild eines zweiten Ausschnitts der Umgebung aufnimmt, das auf transparente oder semitransparente Art und Weise angezeigt werden soll, um es so dem Benutzer zu ermöglichen, das erste und das zweite Bild zusammenzufügen.

14. Verfahren gemäß einem der Ansprüche 1 bis 13, worin eine Position des Benutzers mit Hilfe mindestens eines Positionssensors des tragbaren Kommunikationsgerätes (1) des Benutzers bestimmt wird.

15. Verfahren gemäß einem der Ansprüche 1 bis 14, worin das Bild vor Erfassung der Bilddaten gedreht und/oder abgewickelt wird.

16. Verfahren gemäß einem der Ansprüche 1 bis 15, worin Blockerkennung an dem Bild vorgenommen wird, um Parallelverarbeitung in der Texterkennung erfasster Blöcke zu ermöglichen und um die Reaktionszeit zu verbessern.

17. Verfahren gemäß einem der Ansprüche 1 bis 16, worin mindestens eines der Bilddaten, der Textdaten und der mit den Textdaten zusammenhängenden Daten für mindestens ein aufgenommenes Bild auf einem Server (9) gespeichert wird, um es dem tragbaren Kommunikationsgerät (1) zu ermöglichen, auf mindestens eines der Bilddaten, der Textdaten und der mit den Textdaten zusammenhängenden Daten für mindestens ein aufgenommenes Bild in Echtzeit zuzugreifen.

18. Verfahren gemäß einem der Ansprüche 1 bis 17, worin mindestens eines der Bilddaten, der Textdaten und der mit den Textdaten zusammenhängenden Daten für mindestens ein aufgenommenes Bild in Verbindung mit Positionsdaten gespeichert wird, die eine Position angeben, wo das mindestens eine aufgenommene Bild aufgenommen wurde.

19. Tragbares Kommunikationsgerät (1), das an einem teleskopischen Auszug (10) montiert ist, wobei der teleskopische Auszug (10) Folgendes umfasst:
eine Basis,
zwei untere Stangen (11), die an der Basis angebracht sind,
zwei obere Stangen (12), die verschiebbar in die beiden unteren Stangen (11) einsetzbar sind, und
eine Befestigung (14), die an den zwei oberen Stangen (12) angebracht ist und ausgebildet ist, um das tragbare Kommunikationsgerät (1) zu halten,
Folgendes umfassend:
eine Kamera (15), die ausgebildet ist, um ein Bild einer Umgebung aufzunehmen,
ein Display (3), das ausgebildet ist, um mindestens einen einer Vielzahl von Diensten anzuzeigen, die von einem Benutzer des tragbaren Kommunikationsgeräts (1) auswählbar sind, und
ein Ausgabemittel, das ausgebildet ist, um Daten, die mit Textdaten zusammenhängen, in einer Form auszugeben, die für den Benutzer des tragbaren Kammunikationsgeräts (1) bemerkbar ist oder umgewandelt werden kann, um für ihn bemerkbar zu sein, worin
das tragbare Kommunikationsgerät (1), wenn es an dem teleskopischen Auszug (10) montiert ist, ausgebildet ist, um ein Verfahren gemäß einem der Ansprüche 1 bis 18 durchzuführen, wenn der Benutzer den mindestens einen der Vielzahl von Diensten auswählt.

## Revendications

1. Procédé destiné à fournir des services basés sur caméra en utilisant un dispositif de communication portable (1) d'un utilisateur, dans lequel le dispositif de communication portable (1) de l'utilisateur est monté sur une glissière télescopique (10) comprenant une base (13), deux tiges inférieures (11) attachées à la base (13), deux tiges supérieures (12) pouvant être insérées de manière à coulisser dans les deux tiges inférieures (11) et une fixation (14) attachée aux deux tiges supérieures (12) et apte à maintenir le dispositif de communication portable (1), le procédé comprenant les étapes de:
la prise d'une image d'un environnement en utilisant une caméra (15) du dispositif de communication portable (1) de l'utilisateur pour obtenir des données d'image;
le traitement des données d'image de sorte que des données de texte soient reconnues et extraites des données d'image; et
la sortie de données relatives aux données de texte sous une forme remarquable ou convertible pour être remarquable par l'utilisateur du dispositif de communication portable (1).

2. Procédé selon la revendication 1, dans lequel les données de texte sont en outre traitées pour obtenir les données relatives aux données de texte.

3. Procédé selon la revendication 2, dans lequel au moins l'une de l'étape de traitement et de l'étape d'autre traitement est effectuée par le dispositif de communication portable (1) de l'utilisateur.

4. Procédé selon la revendication 2 ou 3, dans lequel au moins l'une de l'étape de traitement et de l'étape d'autre traitement est effectuée par une unité de traitement externe (8).

5. Procédé selon la revendication 4, dans lequel l'unité de traitement externe comprend au moins un serveur (9).

6. Procédé selon la revendication 5, dans lequel les données de texte sont transmises du dispositif de communication portable (1) de l'utilisateur à l'unité de traitement externe (8), elles sont en outre traitées par l'unité de traitement externe (8) pour former les données relatives aux données de texte et les données relatives aux données de texte sont transmises de l'unité de traitement externe (8) au dispositif de communication portable (1) de l'utilisateur.

7. Procédé selon l'une des revendications 2 à 6, dans lequel une manière d'au moins l'un du traitement et de l'autre traitement dépend d'un service sélectionné par l'utilisateur du dispositif de communication portable (1) de l'utilisateur en utilisant le dispositif de communication mobile (1) de l'utilisateur.

8. Procédé selon la revendication 7, dans lequel le service est sélectionné parmi une pluralité de services affichés sur un affichage (3) du dispositif de communication mobile (1) de l'utilisateur.

9. Procédé selon la revendication 8, dans lequel au moins l'un de la pluralité de services est affiché sur l'affichage (3) du dispositif de communication portable (1) de l'utilisateur en utilisant au moins l'une d'une icône ou de données de texte.

10. Procédé selon l'une des revendications 1 à 9, dans lequel le dispositif de communication portable (1) est commandé par une unité de commande distincte (20).

11. Procédé selon l'une des revendications 1 à 10, dans lequel, en prenant l'image, la caméra (15) utilise un moyen d'actionnement, permettant à l'utilisateur de focaliser sur une portion souhaitée de l'environnement et d'effectuer un déclenchement automatique en prenant l'image.

12. Procédé selon la revendication 11, dans lequel la qualité d'une image à prendre est indiquée par au moins l'une d'une manière d'actionnement d'un vibreur du dispositif de communication portable (1) de l'utilisateur, l'utilisation d'un réticule affiché à l'utilisateur, et une rétroaction audio fournie par le dispositif de communication portable (1).

13. Procédé selon l'une des revendications 1 à 12, dans lequel la caméra (15) prend une première image d'une première portion de l'environnement à afficher d'une manière transparente ou semi-transparente et prend une deuxième image d'une deuxième portion de l'environnement à afficher d'une manière transparente ou semi-transparente afin de permettre de ce fait à l'utilisateur d'assembler la première image et la deuxième image.

14. Procédé selon l'une des revendications 1 à 13, dans lequel une position de l'utilisateur est déterminée en utilisant au moins un capteur de position du dispositif de communication portable (1) de l'utilisateur.

15. Procédé selon l'une des revendications 1 à 14, dans lequel l'image est au moins l'une d'une image tournée et d'une image dégauchie avant d'obtenir les données d'image.

16. Procédé selon l'une des revendications 1 à 15, dans lequel une reconnaissance de bloc est effectuée sur l'image pour permettre un traitement parallèle en reconnaissance de texte des blocs obtenus et pour améliorer le temps de réponse.

17. Procédé selon l'une des revendications 1 à 16, dans lequel au moins l'une des données d'image, des données de texte et des données relatives aux données de texte pour au moins une image prise est stockée sur un serveur (9) pour permettre au dispositif de communication portable (1) d'accéder à l'au moins une des données d'image, des données de texte et des données relatives aux données de texte pour au moins une image prise en temps réel.

18. Procédé selon l'une des revendications 1 à 17, dans lequel au moins l'une des données d'image, des données de texte et des données relatives aux données de texte pour au moins une image prise est stockée en relation avec des données de position indiquant une position à laquelle l'au moins une image prise est prise.

19. Dispositif de communication portable (1) monté sur une glissière télescopique (10), la glissière télescopique (10) comprenant:
une base;
deux tiges inférieures (11) attachées à la base;
deux tiges supérieures (12) pouvant être insérées de manière à coulisser dans les deux tiges inférieures (11); et
une fixation (14) attachée aux deux tiges supérieures (12) et apte à maintenir le dispositif de communication portable (1) comprenant:
une caméra (15) apte à prendre une image d'un environnement;
un affichage (3) apte à afficher au moins l'un d'une pluralité de services pouvant être sélectionnés par un utilisateur du dispositif de communication portable (1); et
un moyen de sortie apte à délivrer des données relatives à des données de texte sous une forme remarquable ou convertible pour être remarquable par l'utilisateur du dispositif de communication portable (1), dans lequel
le dispositif de communication portable (1), lorsqu'il est monté sur la glissière télescopique (10), est apte à effectuer un procédé selon l'une des revendications 1 à 18, lorsque l'utilisateur sélectionne l'au moins un de la pluralité de services.
